# FASCICULE DE BREVET EUROPEEN

(11) **EP 1 725 389 B1**
(45) Date de publication et mention de la délivrance du brevet: **19.03.2008**
(21) Numéro de dépôt: 04805297.1
(22) Date de dépôt: 25.10.2004
(51) Int. Cl.: B29C 49/42, B29C 49/12, B29C 49/36

(54) **MACHINE D'ETIRAGE-SOUFFLAGE A TIGE D'ETIRAGE COMMANDE MECANIQUEMENT**
STRECKBLASMASCHINE MIT MECHANISCH ANGETRIEBENEM STRECKHELFER
STRECH BLOW MOULDING MACHINE WITH MECHANICALLY ACTUATED STRETCH ROD

(30) Priorité: 17.12.2003 FR 0314820
(43) Date de publication de la demande: 29.11.2006
(73) Titulaire: SIDEL PARTICIPATIONS, 76930 Octeville-sur-Mer (FR)
(72) Inventeur: BRACHET, Vincent, 76930 Octeville-sur-Mer (FR); LEGALLAIS, Stéphane, 76930 Octeville-Sur-Mer (FR)
(74) Mandataire: Gorrée, Jean-Michel
(86) Numéro de dépôt international: PCT/FR2004/002738
(87) Numéro de publication internationale: WO 2005/068160

(56) Documents cités:
- US-A- 3 977 822
- US-A- 3 999 927
- US-A- 4 141 680

## Description

L'invention se rapporte au domaine des machines de fabrication de récipients en matière thermoplastique par étirage et soufflage d'une préforme qui est précédemment réalisée par moulage par injection. Ces machines sont notamment utilisées pour fabriquer des récipients, tels que des bouteilles, en polyéthylène téréphtalate (PET).

Dans une telle machine, on utilise des préformes sensiblement tubulaires qui sont fermées à une de leurs extrémités axiales et dont l'autre extrémité axiale est ouverte et présente déjà la forme définitive du col du récipient final.

Chaque préforme est chauffée dans un four de conditionnement thermique de manière à amener le corps de la préforme à une température supérieure à la température de transition vitreuse du matériau thermoplastique. La préforme ainsi conditionnée est transférée vers un moule de soufflage dans lequel est délimitée une cavité à la forme du récipient à obtenir. La préforme est disposée dans le moule de telle sorte que son extrémité ouverte dépasse à l'extérieur du moule. Ainsi, un dispositif de soufflage peut être amené au niveau du col de la préforme pour injecter de l'air sous pression dans la préforme. Simultanément, une tige d'étirage est introduite axialement à l'intérieur de la préforme pour venir en appui contre l'extrémité fermée du fond de la préforme. La tige d'étirage permet ainsi de commander au mieux la déformation axiale de la préforme au cours du soufflage du récipient.

L'invention pourra plus particulièrement être mise en oeuvre dans une machine d'étirage-soufflage de type rotatif comportant plusieurs dispositifs de moulage montés à la périphérie d'un carrousel qui est entraîné de manière continue en rotation autour de son axe. Chaque dispositif de moulage comporte notamment un moule ouvrable, un dispositif de soufflage et un dispositif d'étirage.

Selon une conception connue, le mouvement de la tige d'étirage est commandé par un vérin pneumatique qui fournit l'énergie nécessaire au déplacement de la tige, mais la vitesse d'étirage est régulée grâce à un dispositif à galet et à came qui permet de parfaitement synchroniser la position axiale de la tige d'étirage en fonction de la position angulaire du poste de soufflage considéré autour de l'axe de rotation du carrousel.

Ces systèmes aujourd'hui largement développés donnent entière satisfaction en termes de fonctionnement du procédé de soufflage.

Toutefois, les systèmes connus présentent une consommation globale d'énergie importante. Or, un des postes principaux de consommation d'énergie des machines considérées est constitué par l'air sous pression qui est largement employé pour diverses fonctions. Parmi celles-ci figure la commande pneumatique des vérins de commande de la tige d'étirage de chaque poste de soufflage qu'il faut alimenter en air sous pression à la fois pour la descente et pour la remontée de la tige.

Certes, il a déjà été proposé des solutions pour tenter de réduire la consommation en air sous pression nécessitée par l'actionnement de la tige d'étirage, par exemple en ne commandant le vérin pneumatique que pour la descente de la tige d'étirage et en faisant remonter la tige sous l'action de la pression de soufflage régnant dans le récipient à la fin du processus de soufflage (document FR-2 814 392).

Il a également été envisagé une suppression pure et simple de la commande pneumatique de la tige d'étirage et son remplacement par une commande magnétique (document FR-2 798 093).

Toutefois, ces tentatives ne se sont pas révélées intéressantes, et dans la plupart des machines actuelles, la tige d'étirage continue d'être mue pneumatiquement à la fois à la descente et à la montée.

L'invention a donc pour but de proposer une solution perfectionnée, mais simple qui conduit à une éradication totale de la commande pneumatique des tiges d'étirage et qui conduit par conséquent à une installation pneumatique de moindre importance au sein de la machine.

A ces fins, l'invention propose une machine de fabrication de récipients en matière thermoplastique par étirage et soufflage de préformes, cette machine comprenant un carrousel à rotation continue supportant au moins un dispositif de moulage comportant un moule ouvrable et une tige d'étirage déplaçable, sous l'action de moyens de support et d'entraînement, de façon séquentielle selon l'axe du moule pour assurer l'étirage de la préforme au cours de l'opération de fabrication du récipient, laquelle machine, étant agencée conformément à l'invention, se caractérise en ce que les moyens de support et d'entraînement de la tige d'étirage sont des moyens mécaniques qui comprennent :
- des moyens de prise de mouvement associés fonctionnellement au susdit carrousel et propres à générer, à partir du mouvement de rotation continue monodirectionnelle du carrousel, deux déplacements rotatifs d'amplitudes angulaires données d'un culbuteur qui interviennent en deux emplacements angulaires prédéterminés respectifs de la trajectoire circulaire du carrousel, et
- des moyens de transformation de mouvement propres à transformer les deux susdits déplacements rotatifs d'amplitudes angulaires données du culbuteur en deux déplacements linéaires de sens inverses, alternativement descendant et ascendant, d'un organe d'entraînement selon une trajectoire sensiblement parallèle à l'axe du moule, ledit organe d'entraînement étant accouplé à la tige d'étirage.

L'invention se fonde sur le fait, simple mais jusqu'à présent inexploité, que le carrousel en rotation représente une source de mouvement à partir de laquelle il est possible de recueillir, par des moyens purement mécaniques, les déplacements nécessaires à l'animation des tiges d'étirage. Certes, cet ajout de mouvements auxiliaires va trouver une répercussion au niveau de l'entraînement en rotation du carrousel et il est alors nécessaire de prévoir des moyens de motorisation dimensionnés en conséquence. Toutefois le supplément d'énergie électrique nécessité pour l'entraînement correct du carrousel reste moindre que le coût de l'installation pneumatique d'entraînement de toutes les tiges d'étirage (notamment, le compresseur d'air devient moins puissant, donc moins encombrant et moins coûteux).

Dans un mode de réalisation préféré en raison de sa simplicité structurelle, les moyens de prise de mouvement comprennent :
- des moyens à came fixes, s'étendant au moins en arc de cercle, et avantageusement circulaires, et coaxiaux au carrousel, qui présentent au moins deux bosses situées aux emplacements prédéterminés respectifs de commande des déplacements de la tige d'étirage, et
- un culbuteur à au moins un galet fou supporté de façon librement rotative, autour d'un axe vertical, par le carrousel et entraîné par celui-ci le long des moyens à came, le culbuteur étant propre à être mis en rotation sur une plage angulaire prédéterminée lorsque le galet fou franchit chaque bosse des moyens à came.

Dans ce cas, un exemple pratique de mise en oeuvre consiste en ce que :
- les moyens à came comprennent deux cames fixes superposées, ces cames comportant, pour chaque susdit emplacement prédéterminé, deux bosses respectives disposées décalées angulairement l'une par rapport à l'autre, et
- le culbuteur comporte deux paires de deux galets fous, décalées verticalement l'une par rapport à l'autre pour coopérer respectivement avec les deux susdites cames, ce culbuteur comprenant deux bras en croix solidaires l'un de l'autre et supportant lesdits galets à leurs extrémités respectives, l'axe de rotation du culbuteur coïncidant avec la croisée des deux susdits bras,
ce grâce à quoi, en chacun des susdits emplacements prédéterminés, le culbuteur, en passant sur les deux bosses successives des moyens à came, tourne de 180°.

Dans un exemple concret de réalisation, les susdites cames comportent des surfaces de came respectives qui sont cylindriques de révolution et coaxiales à l'axe du carrousel et le culbuteur est déplacé à l'intérieur de l'espace cylindrique entouré par les cames.

Toujours de façon simple, on peut alors faire en sorte que les moyens de transformation de mouvement comprennent :
- un compas formé de deux bras librement articulés par une de leurs extrémités respectives, ces deux bras du compas étant disposés dans un plan sensiblement vertical,
   le premier de ces bras ayant son autre extrémité articulée librement en un point fixe du carrousel et
   le second de ces bras ayant son autre extrémité articulée sur un coulisseau monté sur un guide parallèle à l'axe du moule, ledit coulisseau supportant ladite tige d'étirage,
- et une bielle d'entraînement ayant une première de ses extrémités rendue solidaire, par l'intermédiaire d'une articulation rotative à trois degrés de liberté, d'un bras rotatif solidaire de l'axe du culbuteur et ayant son autre extrémité raccordée par une articulation rotative à trois degrés de liberté au susdit premier bras du susdit compas.

Conformément au but recherché, les dispositions selon l'invention permettent de s'affranchir totalement de l'actionnement pneumatique des tiges d'étirage, lequel est remplacé par un entraînement purement mécanique animé par la rotation du carrousel.

L'invention sera mieux comprise à la lecture de la description détaillée qui suit de certains modes de réalisation donnés uniquement à titre d'exemples non limitatifs. Dans cette description, on se réfère aux dessins annexés sur lesquels :

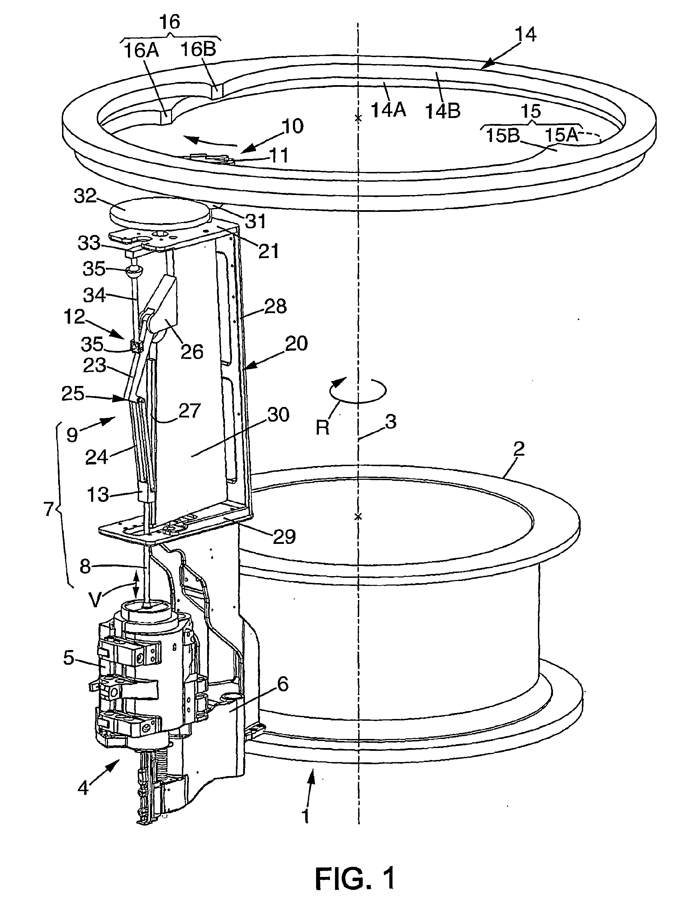

- la figure 1 est une vue schématique partielle, en perspective, d'une machine de moulage de récipient par étirage-soufflage qui est agencée conformément à l'invention ;

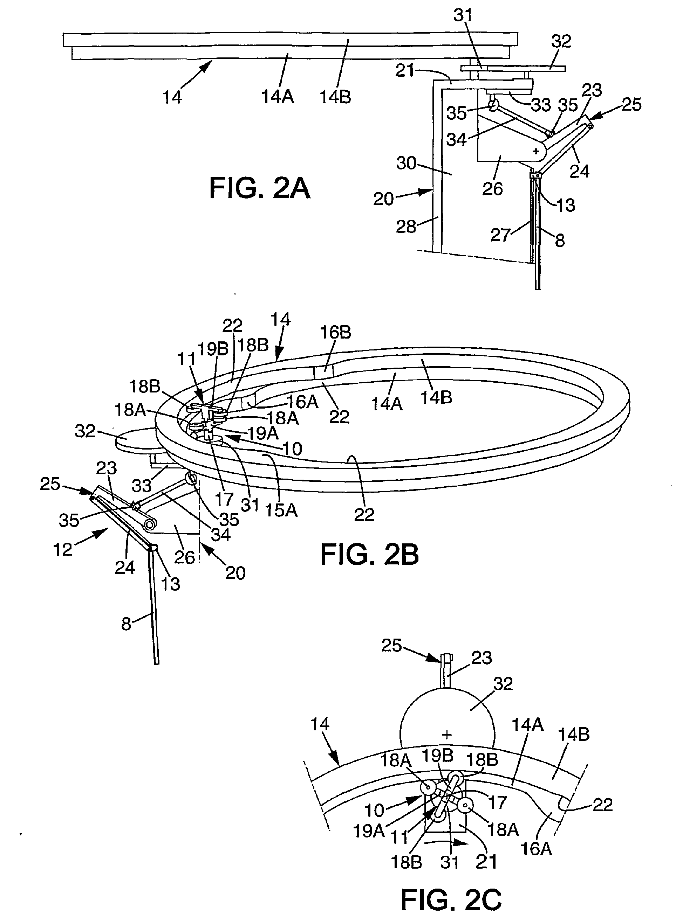

- les figures 2A, 2B et 2C sont des vues à plus grande échelle montrant uniquement les moyens de support et d'entraînement de la tige d'étirage respectivement en vue de côté, en vue de perspective et, pour une partie desdits moyens, en vue de dessus, lesdits moyens étant montrés dans une première position fonctionnelle (tige d'étirage en position haute sortie du moule) ;

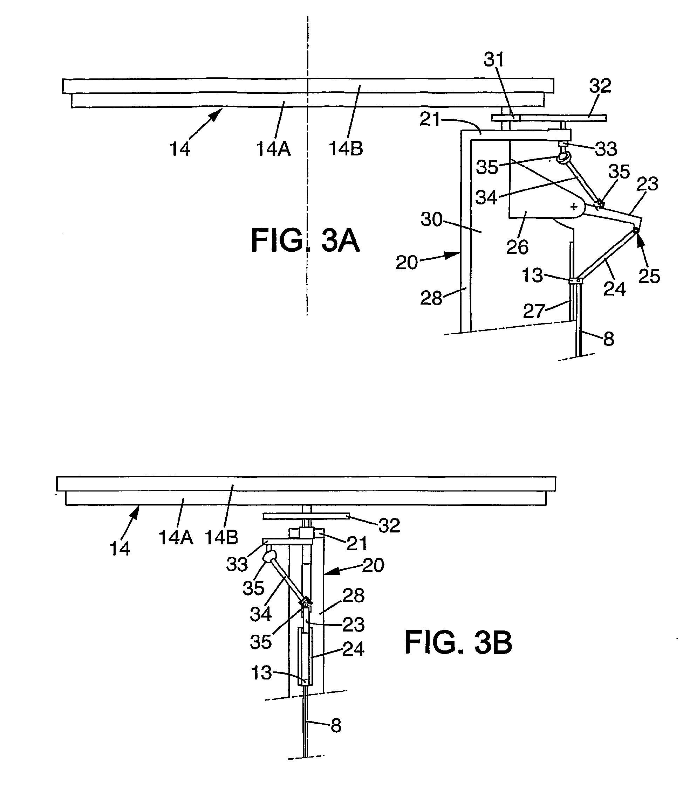

- les figures 3A et 3B sont des vues des moyens de support et d'entraînement de la tige d'étirage respectivement en vue de côté et en vue de face, lesdits moyens étant montrés dans une deuxième position fonctionnelle (tige d'étirage en position intermédiaire, partiellement enfoncée dans le moule) ; et

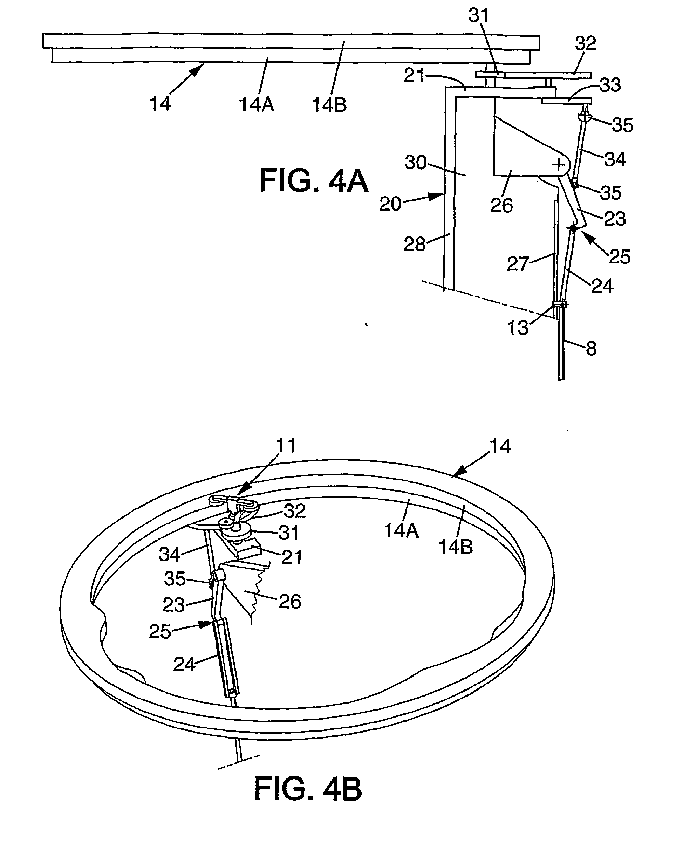

- les figures 4A et 4B sont des vues des moyens de support et d'entraînement de la tige d'étirage respectivement en vue de côté et en vue en perspective, lesdits moyens étant montrés dans une troisième position fonctionnelle (tige d'étirage en position basse, enfoncée totalement dans le moule provoquant l'étirage complet d'une préforme).

En se reportant tout d'abord à la figure 1, une machine de fabrication de récipients en matière thermoplastique par étirage-soufflage de préformes, du type visé par l'invention, comprend un carrousel 1 (schématisé par son tambour central 2) à rotation continue monodirectionnelle à vitesse constante (flèche R) autour de son axe 3.

Le tambour central 2 supporte au moins un dispositif de moulage 4 (en pratique on trouve une multiplicité de dispositifs de moulage répartis sur le pourtour du tambour). Chaque dispositif de moulage 4 comprend un moule 5 ouvrable (par exemple, comme illustré, un moule portefeuille formé de deux demi-moules pivotants, avec éventuellement un fond mobile verticalement), lequel moule 5 est supporté sur le tambour par l'intermédiaire d'un berceau 6.

Pour rendre le dessin mieux lisible, les moyens de soufflage pneumatiques sous haute pression - propres à dilater une préforme en matière thermoplastique chauffée en un récipient moulé -, qui n'interviennent pas directement, sur le plan technique, dans la conception des moyens de l'invention, ne sont pas représentés sur la figure 1.

Des moyens d'étirage mécaniques 7 comprennent une tige d'étirage 8 déplaçable axialement verticalement (double flèche V), de façon séquentielle, pour la faire descendre dans le moule 5 afin d'étirer mécaniquement la préforme chaude axialement en synchronisme avec le soufflage et pour la sortir hors du moule une fois le récipient moulé.

Les moyens d'étirage 7 comprennent en outre des moyens 9 de support et d'entraînement de la tige d'étirage 8 selon le mouvement et la séquence requis, lesquels moyens 9 sont, conformément à l'invention, des moyens purement mécaniques comme cela va maintenant être expliqué.

Lesdits moyens 9 de support et d'entraînement de la tige d'étirage 8 comprennent :
- des moyens 10 de prise de mouvement qui sont associés fonctionnellement au carrousel 2 et qui sont propres à générer, à partir du mouvement de rotation continue monodirectionnelle R du carrousel 2, deux déplacements rotatifs d'amplitudes angulaires données d'un culbuteur 11, ces déplacements intervenant en deux emplacements angulaires prédéterminés respectifs de la trajectoire circulaire du carrousel, et
- des moyens 12 de transformation de mouvement propres à transformer les deux susdits déplacements rotatifs d'amplitudes angulaires données du culbuteur 11 en deux déplacements linéaires de sens inverses, respectivement descendant et ascendant, d'un organe d'entraînement 13 selon une trajectoire sensiblement parallèle à l'axe du moule 5, ledit organe d'entraînement 13 étant accouplé à la tige d'étirage 8.

Des modes de réalisation préférés des moyens d'entraînement ci-dessus exposés vont maintenant être exposés en se référant plus particulièrement à la figure 1 et également aux figures 2A à 2C qui montrent ces moyens de façon isolée et claire respectivement en vue en perspective (figure 2A), en vue de côté (figure 2B) et en vue partielle de dessus (figure 2C).

Pour ce qui est, tout d'abord, plus particulièrement des moyens 10 de prise de mouvement, ils peuvent être constitués comme il suit.

Des moyens 14 à came s'étendant au moins en arc de cercle sont supportés de façon fixe sur le bâti (non montré) de la machine et coaxialement au carrousel. De préférence, les moyens 14 à came sont circulaires comme illustré sur les figures, cette réalisation semblant actuellement être la plus simple à mettre en oeuvre. Ces moyens 14 à came comportent au moins deux bosses, 15 et 16, écartées angulairement l'une de l'autre et situées aux emplacements prédéterminés respectifs de commande des déplacements verticaux, dans un sens et dans l'autre, de la tige d'étirage 8.

Le susdit culbuteur 11 est un culbuteur à galet fou qui est supporté de façon librement rotative, autour d'un axe 17 vertical, par le carrousel (par exemple par l'intermédiaire d'une potence ou colonne de support 20 qui est solidaire du tambour 2 et qui supporte également l'ensemble des moyens 12 de transformation de mouvement précités). Le culbuteur 11 est ainsi entraîné le long des moyens à came 14, le culbuteur 11 étant propre à être mis en rotation sur une plage angulaire prédéterminée lorsque le galet fou franchit chaque bosse 15, 16 des moyens à came 14.

La distance angulaire entre les deux susdits emplacements prédéterminés de la trajectoire du carrousel, autrement dit entre les deux bosses 15, 16, est déterminée en fonction de la vitesse de rotation du carrousel et de la séquence précise selon laquelle doit être conduite la phase d'étirage, de manière telle que - un tour complet du carrousel correspondant à un cycle complet du processus d'étirage-soufflage y compris le chargement de la préforme et le déchargement du récipient moulé - le passage du culbuteur 11 d'abord sur la première bosse 15, puis sur la seconde bosse 16 coïncide, dans le cycle de rotation du carrousel, avec les instants où, dans le cycle de fabrication du récipient, la tige d'étirage 8 doit d'abord être descendue dans le moule (étirage, en correspondance avec la bosse 15), puis être remontée hors du moule (fin du soufflage, en correspondance avec la bosse 16), le processus de soufflage se déroulant en correspondance avec la circulation du culbuteur 11 dans l'intervalle entre les bosses 15 et 16.

Il est souhaitable que la rotation subie par le culbuteur 11 lors de son passage sur chaque bosse 15, 16 s'étende sur une plage angulaire étendue, notamment par exemple sur environ un demi-tour.

A cette fin, on peut, dans un exemple préféré de réalisation, prévoir l'agencement suivant.

Les moyens à came 14 comprennent deux cames fixes 14A, 14B, circulaires et superposées, la référence 14A désignant par exemple la came inférieure et la référence 14B désignant la came supérieure. De leur côté, les deux bosses 15, 16 sont elles aussi constituées sous forme double, c'est-à-dire que la bosse 15 comprend une première bosse 15A formée sur la came inférieure 14A suivie (dans le sens de circulation du culbuteur 11) d'une seconde bosse 15B formée sur la came supérieure 14B ; la bosse 16, de la même manière comprend une première bosse 16A sur la came 14A et une seconde bosse 16B sur la came 14B. La distance angulaire entre les deux bosses successives 15A, 15B et les deux bosses successives 16A et 16B est relativement faible et juste nécessaire pour provoquer une double rotation du culbuteur 11 qui est, quant à lui, agencé de la façon suivante.

Le culbuteur 11 est équipé de deux paires de galets fous respectivement 18A et 18B qui sont décalées verticalement l'une par rapport à l'autre de manière à être situées en regard respectivement des deux cames 14A, 14B. De façon plus précise, le culbuteur 11 comporte deux bras 19A, 19B solidaires l'un de l'autre, disposés en croix, décalés l'un par rapport à l'autre verticalement, et supportant les paires de galets 18A et 18B respectivement. Le culbuteur 11 ainsi constitué est supporté fou, par son axe 17 coïncidant avec la croisée des bras 19A, 19B, sur une platine 21 solidaire de la colonne 20.

Le culbuteur se présente donc sous la forme d'un chariot librement pivotant, qui est en appui sur les deux cames 14A, 14B par deux galets respectifs 18A, 18B. Chaque fois qu'un galet 18A ou 18B se présente devant une bosse 15A, 16A ou respectivement 15B, 16B, le culbuteur tourne autour de son axe de telle sorte que le galet opposé du même bras vienne en appui sur la came respective, la rotation correspondante du culbuteur étant d'un quart de tour. Grâce à la mise en oeuvre de deux bosses successives 15A, 15B, respectivement 16A, 16B, le culbuteur 11 est amené à tourner, à chaque fois, d'un demi-tour, comme souhaité.

Bien que la conception des moyens à came 14, et donc également celle du culbuteur 11, puisse donner lieu à diverses réalisations, il est cependant avantageux que les deux cames 14A, 14B soient réalisées sous forme de bagues annulaires dont la face intérieure (c'est-à-dire la face de forme générale cylindrique de révolution nonobstant la présence des bosses précitées) constitue la surface de roulement des galets correspondants du culbuteur 11. De ce fait, le culbuteur 11 évolue à l'intérieur de l'espace cylindrique entouré par les cames. L'ensemble se présente donc avec un encombrement minimum. En outre, la force centrifuge s'exerçant sur le culbuteur en déplacement contribue à maintenir celui-ci au contact des surfaces de roulement des cames 14A, 14B.

On notera que, dans ce mode de réalisation et comme on le voit mieux à la figure 2C, l'axe de pivotement 17 du culbuteur 11 se déplace sur une trajectoire circulaire parallèle aux surfaces de roulement (à l'exclusion des bosses) des cames 14A, 14B. Lorsqu'un galet en appui sur une came (par exemple, à la figure 2C, le galet 18A en appui sur la came 14A) parvient sur une bosse (par exemple 16A), le pivotement du culbuteur 11 s'effectue avec maintien de l'autre galet en appui contre l'autre came (par exemple le galet 18B en appui contre la came 14B). Toutefois la longueur du demi-bras 19B supportant ledit galet 18B est supérieure à la distance radiale séparant l'axe 17 de la surface de la came 14B. Pour autoriser le libre mouvement de pivotement du culbuteur, on prévoit donc, dans chaque came 14A, 14B, un évidement 22 situé au droit de la bosse prévue sur l'autre came.

Pour ce qui est maintenant des moyens 12 de transformation de mouvement, il est possible d'envisager diverses réalisations pour transformer le mouvement de rotation monodirectionnel discontinu d'amplitude angulaire donnée (notamment sur 180°) engendré par le culbuteur 11 en un mouvement de va et vient linéaire vertical de la tige d'étirage 8. Des moyens structurellement simples et capables de supporter de façon fiable les cadences élevées de fonctionnement du type de machines concernées peuvent avantageusement être constitués comme il suit.

Un compas 25 est formé par deux bras 23, 24 articulés librement en rotation l'un à l'autre et disposés dans un plan sensiblement vertical. Le premier bras 23 a son autre extrémité articulée librement en rotation sur une partie fixe du carrousel, par exemple sur une console 26 solidaire de la colonne 20 précitée. Le second bras 24 a son autre extrémité articulée sur le susdit organe d'entraînement 13 formé en tant que coulisseau librement coulissant sur un guide 27 vertical (c'est-à-dire parallèle à l'axe du moule 5) ; le coulisseau 13 supporte l'extrémité supérieure de la tige d'étirage 8.

Dans l'exemple de réalisation illustré plus clairement à la figure 1, la potence ou colonne 20 est agencée avec un dos 28 en forme de plaque verticale qui supporte, supérieurement, la susdite platine 21 et qui est solidaire, inférieurement, d'un piétement 29 permettant sa fixation au tambour 2 du carrousel. L'ensemble de la colonne 20 présente alors la forme générale d'un U couché, à l'intérieur duquel est rapportée une plaque de raidissement 30 en haut de laquelle est fixée la susdite console 26. Sous la console 26, le bord frontal de la plaque de raidissement 30 est agencé pour constituer ou pour supporter le guide vertical 27 du coulisseau 13. L'agencement de la colonne 20 qui vient d'être exposé permet de combiner l'avantage d'une très bonne rigidité de la colonne - qui est garante, d'une part, d'un appui correct du culbuteur 11 sur les moyens à came 14 et, d'autre part, de l'indéformabilité du guide 27 nécessaire pour que la tige d'étirage 8 se déplace correctement selon l'axe du moule - avec l'avantage d'une intégration de certains composants dans la structure de la colonne 20, ce qui conduit à un gain de place et de poids.

Pour amener le mouvement de pivotement du culbuteur 11, situé intérieurement aux moyens à came 14, jusqu'au compas 25 et à la tige d'étirage 8 situés extérieurement auxdits moyens à came 14, on prévoit une transmission à roues dentées, avec une première roue dentée 31 calée sur l'axe 17 du culbuteur 11 et donc solidaire de ce dernier en rotation et engrenant avec une seconde roue dentée 32 supportée à libre rotation par la platine 21. L'axe de la seconde roue dentée 32 supporte rigidement un bras radial 33. Ce bras 33 est donc animé d'un mouvement de pivotement, commandé par le culbuteur 11, sur une plage angulaire déterminée par le rapport de démultiplication des deux roues dentées 31, 32. Dans l'exemple plus particulièrement illustré aux figures 1 et 2A-2C, dans lequel le culbuteur 11 pivote d'un demi-tour au passage de chaque paire de bosses 15A, 15B et 16A, 16B, le rapport de démultiplication des roues dentées 31, 32 est déterminé de manière telle que l'extrémité du bras 33 effectue un demi-tour en synchronisme avec le culbuteur 11 lorsque celui-ci effectue un demi-tour.

Enfin une bielle d'entraînement 34 est interposée entre l'extrémité du bras 33 et une partie intermédiaire du bras 23 du compas 25, auxquels elle est solidarisée par l'intermédiaire de liaisons 35 à trois degrés de liberté en rotation (par exemple des articulations sphériques et/ou des cardans).

Le bras 33 est calé sur l'axe de la seconde roue dentée 32 de manière à s'étendre approximativement dans le plan défini par le compas 25 lorsque le culbuteur 11 est déplacé en dehors des bosses 15, 16 des moyens à came 14. Dans ce cas, la bielle 34 s'étend elle aussi dans ce plan.

Le fonctionnement du mécanisme qui vient d'être expliqué apparaît clairement sur les dessins annexés.

Sur les figures 2A à 2C, le positionnement angulaire du culbuteur 11 le long des moyens à came 14 est tel que le bras 33 s'étende en direction de l'axe 3 de rotation du carrousel. Dans cette position, l'extrémité du bras 33 a entraîné la bielle 34 qui, à son tour, a provoqué le relèvement du bras 23 du compas 25 par rotation sur la platine 26. Le compas 25 se présente ainsi en conformation fermée, avec le coulisseau 13 amené en haut du guide 27. La tige d'étirage 8 est alors en position remontée, hors du moule 5.

Aux figures 3A et 3B, le culbuteur 11 est en cours de franchissement d'une bosse 15 ou 16, et, plus particulièrement, il est supposé être à mi-pivotement entre les bosses 15A, 15B, ou respectivement 16A, 16B. Le bras 33 est alors pivoté de 90° (figure 3B), la bielle 34 est inclinée en diagonale et le coulisseau 13 se trouve à mi-course du guide 27. La tige d'étirage est à moitié engagée dans le moule 5.

Aux figures 4A et 4B, le culbuteur 11 a franchi la bosse précédente 15 ou 16, et a donc terminé son pivotement. Le bras 23 est maintenant tourné à l'opposé de l'axe du carrousel de sorte que la bielle 34 repousse le bras 23 du compas 25 vers le bas. Le compas 25 est ainsi ouvert au maximum, le coulisseau 13 étant situé au bas du guide 27. La tige d'étirage 8 est alors enfoncée au maximum à l'intérieur du moule. C'est cette situation qui est illustrée également à la figure 1.

## Revendications

1. Machine de fabrication de récipients en matière thermoplastique par étirage et soufflage de préformes, cette machine comprenant un carrousel (1) à rotation continue supportant au moins un dispositif de moulage (4) comportant un moule (5) ouvrable et une tige d'étirage (8) déplaçable, sous l'action de moyens (9) de support et d'entraînement, de façon séquentielle selon l'axe (3) du moule pour assurer l'étirage de la préforme au cours de l'opération de fabrication du récipient,
**caractérisée en ce que** les moyens (9) de support et d'entraînement de la tige d'étirage (8) sont des moyens mécaniques qui comprennent :
- des moyens (10) de prise de mouvement associés fonctionnellement au susdit carrousel (1) et propres à générer, à partir du mouvement de rotation continue monodirectionnelle du carrousel, deux déplacements rotatifs d'amplitudes angulaires données d'un culbuteur (11) qui interviennent en deux emplacements angulaires prédéterminés respectifs de la trajectoire circulaire du carrousel, et
- des moyens (12) de transformation de mouvement propres à transformer les deux susdits déplacements rotatifs d'amplitudes angulaires données du culbuteur en deux déplacements linéaires de sens inverses, alternativement descendant et ascendant, d'un organe d'entraînement (13) selon une trajectoire sensiblement parallèle à l'axe du moule, ledit organe d'entraînement (13) étant accouplé à la tige d'étirage (8).

2. Machine selon la revendication 1, **caractérisée en ce que** les moyens (10) de prise de mouvement comprennent :
- des moyens (14) à came fixes, s'étendant au moins en arc de cercle et coaxiaux au carrousel, qui présentent au moins deux bosses (15, 16) situées aux emplacements prédéterminés respectifs de commande des déplacements de la tige d'étirage (8), et
- un culbuteur (11) à au moins un galet fou supporté de façon librement rotative, autour d'un axe (17) vertical, par le carrousel (1) et entraîné par celui-ci le long des moyens à came, le culbuteur (11) étant propre à être mis en rotation sur une plage angulaire prédéterminée lorsque le galet fou franchit chaque bosse (15, 16) des moyens à came.

3. Machine selon la revendication 2, **caractérisée en ce que** :
- les moyens (14) à came comprennent deux cames fixes (14A, 14B) superposées, ces cames comportant, pour chaque susdit emplacement prédéterminé, deux bosses respectives (15A, 16A ; 15B, 16B) disposées décalées angulairement l'une par rapport à l'autre, et
- le culbuteur (11) comporte deux paires de deux galets fous (18A, 18B), décalées verticalement l'une par rapport à l'autre pour coopérer respectivement avec les deux susdites cames (14A, 14B), ce culbuteur (11) comprenant deux bras (19A, 19B) en croix solidaires l'un de l'autre et supportant lesdits galets à leurs extrémités respectives, l'axe (17) de rotation du culbuteur coïncidant avec la croisée des deux susdits bras,
ce grâce à quoi, en chacun des susdits emplacements prédéterminés, le culbuteur, en passant sur les deux bosses successives des moyens à came, tourne de 180°.

4. Machine selon la revendication 2 ou 3, **caractérisée en ce que** les moyens à came fixes sont circulaires.

5. Machine selon la revendication 3 ou 4, **caractérisée en ce que** les susdites cames (14A, 14B) comportent des surfaces de came respectives qui sont cylindriques de révolution et coaxiales à l'axe du carrousel et **en ce que** le culbuteur (11) est déplacé à l'intérieur de l'espace cylindrique entouré par les cames.

6. Machine selon l'une quelconque des revendications 2 à 5, **caractérisée en ce que** les moyens (12) de transformation de mouvement comprennent :
- un compas (25) formé de deux bras (23, 24) librement articulés par une de leurs extrémités respectives, ces deux bras (23, 24) étant disposés dans un plan sensiblement vertical,
le premier de ces bras (23) ayant son autre extrémité articulée librement en un point fixe (26) du carrousel (1) et
le second de ces bras (24) ayant son autre extrémité articulée sur un coulisseau (13) monté sur un guide (27) parallèle à l'axe du moule, ledit coulisseau (13) supportant ladite tige d'étirage (8),
- et une bielle d'entraînement (34) ayant une première de ses extrémités rendue solidaire, par l'intermédiaire d'une articulation rotative à trois degrés de liberté, d'un bras rotatif (33) solidaire de l'axe du culbuteur (11) et ayant son autre extrémité raccordée par une articulation rotative à trois degrés de liberté au susdit premier bras (23) du susdit compas.

## Claims

1. A machine for manufacturing containers made of a thermoplastic by stretching and blow molding preforms, said machine comprising a continuously rotating turntable (1) supporting at least one molding device (4) comprising an openable mold (5) and a stretching rod (8) which can be sequentially moved, by support and driving means (9), along the axis (3) of the mold so as to stretch the preform during the container manufacture operation,
**characterized in that** the means (9) for supporting and driving the stretch rod (8) are mechanical means which comprise:
- power takeoff means (10) operationally associated with said turntable (1) and able to generate, from the continuous unidirectional rotation movement of the turntable, two rotary movements of given angular amplitudes of a rocker (11) occurring at two respective predetermined angular locations of the circular route of the turntable, and
- movement conversion means (12) able to convert said two rotary movements of given angular amplitudes of the rocker into two alternately descending and ascending opposite linear movements of a drive member (13) along a route substantially parallel to the axis of the mold, said drive member (13) being connected to the stretching rod (8).

2. The machine as claimed in claim 1, **characterized in that** the power takeoff means (10) comprise:
- fixed cam means (14) extending at least in a circular arc and coaxial with the turntable, having at least two bosses (15, 16) at the respective predetermined locations for controlling the movements of the stretching rod (8), and
- a rocker (11) with at least one idler roller supported in a freely rotating manner about a vertical axis (17) by the turntable (1) and driven thereby along the cam means, the rocker (11) being able to be rotated over a predetermined angular range when the idler roller passes each boss (15, 16) of the cam means.

3. The machine as claimed in claim 2, **characterized in that**:
- the cam means (14) comprise two superimposed fixed cams (14A, 14B), these cams comprising, for said each predetermined location, two respective bosses (15A, 16A; 15B, 16B) arranged angularly offset to one another, and
- the rocker (11) comprises two pairs of two idler rollers (18A, 18B), vertically offset to one another for respectively cooperating with said two cams (14A, 14B), this rocker (11) comprising two arms (19A, 19B) in a cross integral with each other and supporting said rollers at their respective ends, the axis (17) of rotation of the rocker coinciding with the intersection of said two arms,
whereby, at each of said predetermined locations, the rocker, by passing over the two successive bosses of the cam means, rotates by 180°.

4. The machine as claimed in claim 2 or 3, **characterized in that** the fixed cam means are circular.

5. The machine as claimed in claim 3 or 4, **characterized in that** said cams (14A, 14B) comprise respective cam surfaces which are cylinders of revolution and coaxial with the axis of the turntable and **in that** the rocker (11) is moved within the cylindrical space bounded by the cams.

6. The machine as claimed in any one of claims 2 to 5,
**characterized in that** the movement conversion means (12) comprise:
- a caliper (25) formed from two arms (23, 24) hinged freely by one of their respective ends, these two arms (23, 24) being arranged in a substantially vertical plane,
the first of said arms (23) having its other end hinged freely at a fixed point (26) of the turntable (1) and
the second of said arms (24) having its other end hinged on a slide (13) mounted on a guide (27) parallel to the mold axis, said slide (13) supporting said stretching rod (8),
- and a drive rod (34) having a first of its ends made integral, via a rotary hinge with three degrees of freedom, with a rotary arm (33) integral with the axis of the rocker (11) and having its other end connected via a rotary hinge with three degrees of freedom to said first arm (23) of said caliper.

## Patentansprüche

1. Maschine zum Herstellen von Behältern aus Thermoplastwerkstoff durch Streckformen und Blasformen von Vorformlingen, wobei diese Maschine einen Kreisförderer (1) mit ständiger Drehung aufweist, der mindestens eine Formvorrichtung (4) trägt, die eine Form (5) aufweist, die geöffnet werden kann, und einen Formschaft (8), der unter der Einwirkung von Trag- und Antriebsmitteln (9) sequenziell entlang der Achse (3) der Form bewegt werden kann, um das Streckformen des Vorformlings im Laufe des Herstellungsvorgangs des Behälters sicherzustellen,
**dadurch gekennzeichnet, dass** die Trag- und Antriebsmittel (9) des Formschafts (8) mechanische Mittel sind, die Folgendes aufweisen:
- Bewegungsaufnahmemittel (10), die funktional mit dem Kreisförderer (1) verbunden sind und ausgehend von der kontinuierlichen Drehbewegung des Kreisförderers in eine Richtung zwei Drehbewegungen mit gegebenen Winkelamplituden einer Kippeinrichtung (11) erzeugen können, die an zwei vorbestimmten Winkelstellen des Kreisverlaufs des Kreisförderers eingreifen, und
- Bewegungsumwandelmittel (12), die die zwei Drehbewegungen mit gegebenen Winkelamplituden der Kippeinrichtung in zwei lineare Bewegungen in umgekehrte Richtungen, die abwechselnd ab- und aufsteigen, für ein Antriebsorgan (13) entlang einer im Wesentlichen zu der Achse der Form parallelen Bahn umwandeln können, wobei das Antriebsorgan (13) mit dem Formschaft (8) gekuppelt ist.

2. Maschine nach Anspruch 1, **dadurch gekennzeichnet, dass** die Bewegungsaufnahmemittel (10) Folgendes aufweisen:
- stationäre Nockenmittel (14), die sich mindestens im Kreisbogen und koaxial zu dem Kreisförderer erstrecken, die mindestens zwei Höcker (15, 16) aufweisen, die sich an den jeweiligen vorbestimmten Stellen zum Steuern der Bewegungen des Formschafts (8) befinden und
- eine Kippeinrichtung (11) mit mindestens einer Laufrolle, die frei drehend um eine senkrechte Achse (17) von dem Kreisförderer (1) getragen und von diesem entlang der Nockenmittel angetrieben wird, wobei die Kippeinrichtung (11) auf einem vorbestimmten Winkelbereich in Drehung versetzt werden kann, wenn die Laufrolle jeden Höcker (15, 16) der Nockenmittel überfährt.

3. Maschine nach Anspruch 2, **dadurch gekennzeichnet, dass**:
- die Nockenmittel (14) zwei stationäre übereinander liegende Nocken (14A, 14B) aufweisen, wobei diese Nocken für jede der vorbestimmten Stellen zwei jeweilige Höcker (15A, 16A; 15B, 16B) aufweisen, die winkelig voneinander versetzt angeordnet sind, und
- die Kippeinrichtung (11) zwei Paare aus zwei Laufrollen (18A, 18B) aufweist, die senkrecht voneinander versetzt sind, um jeweils mit den zwei Nocken (14A, 14B) zusammenzuwirken, wobei diese Kippeinrichtung (11) zwei Arme (19A, 19B) gekreuzt aufweist, die fest miteinander verbunden sind und die Laufrollen an ihren jeweiligen Enden tragen, wobei die Rotationsachse (17) des Kippers mit dem Kreuzen der zwei Arme zusammenfällt,
so das die Kippeinrichtung an jeder der vorbestimmten Stellen beim Durchgehen auf den zwei aufeinander folgenden Höckern der Nockenmittel um 180° dreht.

4. Maschine nach Anspruch 2 oder 3, **dadurch gekennzeichnet, dass** die stationären Nockenmittel kreisförmig sind.

5. Maschine nach Anspruch 3 oder 4, **dadurch gekennzeichnet, dass** die Nocken (14A, 14B) jeweils Nockenoberflächen aufweisen, die rotationszylindrisch und koaxial zu der Achse des Kreisförderers sind, und dass die Kippeinrichtung (11) im Inneren des zylindrischen, von den Nocken umgebenen Raums bewegt wird.

6. Maschine nach einem der Ansprüche 2 bis 5, **dadurch gekennzeichnet, dass** die Bewegungsumformmittel (12) Folgendes aufweisen:
- eine Gabel (25), gebildet aus zwei Armen (23, 24), die frei an einem ihrer jeweiligen Enden angelenkt sind, wobei diese zwei Arme (23, 24) in einer im Wesentlichen senkrechten Ebene angeordnet sind,
wobei der erste dieser Arme (23) sein anderes Ende frei an einem stationären Punkt (26) des Kreisförderers (1) angelenkt hat und der zweite dieser Arme (24) sein anderes Ende auf einem Stößel (13) angelenkt hat, der auf einer Führung (27) parallel zur Achse der Form installiert ist, wobei der Stößel (13) den Formschaft (8) trägt,
- und ein Antriebspleuel (34), von dem ein erstes Ende fest über eine Drehanlenkung mit drei Freiheitsgraden mit einem Dreharm (33) verbunden ist, der fest mit der Achse der Kippeinrichtung (11) verbunden ist und von dem das andere Ende mit einer Drehanlenkung mit drei Freiheitsgraden an dem ersten Arm (23) der Gabel angeordnet ist.
